Europäisches Patentamt

European Patent Office

Office européen des brevets

(19)

(11) Veröffentlichungsnummer: **0 066 731**
**B1**

(12) **EUROPÄISCHE PATENTSCHRIFT**

(45) Veröffentlichungstag der Patentschrift:
**27.12.84**

(21) Anmeldenummer: **82104260.3**

(22) Anmeldetag: **15.05.82**

(51) Int. Cl.³: **C 08 F 14/06, C 08 F 2/24**

(54) Verfahren zur diskontinulerlichen Polymerisation von Vinylchlorid.

(30) Priorität: **25.05.81 DE 3120708**

(43) Veröffentlichungstag der Anmeldung:
**15.12.82 Patentblatt 82/50**

(45) Bekanntmachung des Hinweises auf die Patenterteilung:
**27.12.84 Patentblatt 84/52**

(84) Benannte Vertragsstaaten:
**BE DE FR GB IT NL**

(56) Entgegenhaltungen:
**DE - A - 2 629 655**
**FR - A - 2 258 404**
**FR - A - 2 370 760**

(73) Patentinhaber: **BASF Aktiengesellschaft,
Carl-Bosch-Strasse 38, D-6700 Ludwigshafen (DE)**

(72) Erfinder: **Elser, Hermann, Dr., Mueller-Thurgau-Weg 3,
D-6706 Wachenheim (DE)**
Erfinder: **Hildenbrand, Peter, Dr., Marienstrasse 105,
D-7500 Karlsruhe (DE)**
Erfinder: **Swoboda, Otto Paul, Dr.,
Rheindammstrasse 32, D-6800 Mannheim (DE)**

## Beschreibung

Die Erfindung betrifft ein diskontinuierliches Verfahren zur Herstellung von Vinylchlorid nach dem Mikrosuspensionsverfahren. Die erhaltenen Polymerisate können zu Plastisolen verarbeitet werden.

Zum Stand der Technik nennen wir 1) DE-PS Nr. 962834, 2) DE-AS Nr. 1050062, 3) DE-OS Nr. 1520133, 4) DE-AS Nr. 2240477, 5) US-PS Nr. 3980603, 6) DE-AS Nr. 2629655, und 7) Ugelstad *et al.* in „A.L. Smith, Theory and Practice of Emulsion Technology", Academic Press 1976, S. 13.

Zur Herstellung von PVC für die Plastisolverarbeitung sind besonders zwei gattungsmässig verschiedene Verfahren, das Emulsions- und das Mikrosuspensionspolymerisationsverfahren, geeignet, die Latexteilchen mit einem gewichtsmittleren Durchmesser zwischen 0,2 und 2 µm liefern.

Das grundlegende Verfahren für die Mikrosuspensionspolymerisation, d.h. die Polymerisation nach vorheriger Homogenisierung des Polymerisationsansatzes ist in 1 bzw. 2 beschrieben. Die Mitverwendung von langkettigen Alkoholen bzw. anderen langkettigen öllöslichen Substanzen bei der Mikrosuspensionspolymerisation ist aus 3 bekannt. In 4 ist die Verwendung spezieller Initiatoren für das Mikrosuspensionsverfahren beschrieben. Für die Durchführung des Mikrosuspensionsverfahrens ist eine ausreichende Stabilität des Polymerisationssystems von ausschlaggebender Bedeutung. Nachteile eines instabilen Polymerisationssystems sind z.B. grobe PVC-Teilchen, die die Produktqualität herabsetzen, und Ablagerungen im Polymerisationsreaktor, die die Abfuhr der Polymerisationswärme erschweren und die das Ablassen der PVC-Dispersion aus dem Reaktor nach der Polymerisation behindern. Ausreichende Stabilität des Polymerisationssystems kann bisher nur durch die gleichzeitige Anwendung optimaler Homogenisierbedingungen und eines möglichst aktiven Dispergierhilfsmittelsystems erzielt werden. Bei Verwendung von weniger aktiven, wasserlöslichen Emulgatoren, wie z.B. Fettsäuresalzen anstelle von z.B. Alkylsulfaten, reicht unter gegebenen Homogenisierbedingungen die Stabilität des Polymerisationssystems nicht aus. Es ist jedoch wünschenswert, Produkte mit Fettsäureemulgatoren herzustellen, da diese Produkte in Transparenz, Metallhaftung und Thermostabilität vorteilhaft sind. Grundsätzlich kann die Stabilität des Polymerisationssystems durch die Massnahmen — Erhöhung der Scherkräfte bei der Homogenisierung, Verlängerung der Homogenisierdauer und Erhöhung der auf das Monomer bezogenen Menge an Dispergierhilfsmitteln — verbessert werden. Die beiden erstgenannten Massnahmen sind jedoch mit einer erhöhten Belastung der Homogenisiereinrichtungen verbunden, die unter diesen Bedingungen einem schnelleren Verschleiss unterliegen. Die zuletzt genannte Massnahme führt zu Nachteilen im Produkt: In der Regel weisen derart hergestellte Produkte eine erhöhte Wasseraufnahme oder nach der Verarbeitung ein Ausschwitzen der Tenside auf.

Aus 7 ist es bekannt, dass durch die Voremulgierung eines langkettigen Alkohols in der wässerigen Lösung eines anionischen Tensids eine Styrolemulsion stabilisiert werden kann. Wie in 7 ausführlich dargestellt ist, bleibt der Stabilitätsgewinn jedoch nur dann erhalten, wenn nach der Emulgierung des Styrols keine weiteren Scherkräfte einwirken.

In 6 wird schliesslich ein Emulsionspolymerisationsverfahren von VC beschrieben, bei dem durch Voremulgierung eines langkettigen Fettalkohols der Produktvorteil — verbesserte Lagerstabilität des Plastisols — erzielt wird. In 6 ist jedoch ausdrücklich darauf hingewiesen (vgl. Spalte 3, Zeilen 32 ff.), dass die Polymerisation mittels wasserlöslicher organischer Initiatoren erfolgen müsse.

Es bestand die Aufgabe, die vorstehend geschilderten Nachteile des gattungsgemässen Mikrosuspensionspolymerisationsverfahrens von VC zu beheben. Es konnte nicht erwartet werden, dass die aus 7 und 6 bekannte Voremulgierung des langkettigen Alkohols bei der Mikrosuspensionspolymerisation zu einer Stabilisierung des Polymerisationssystems führt. Überraschend wurde durch diese Massnahme erreicht, dass der Koagulatanfall unter gegebenen Homogenisierbedingungen geringer ist, dass die Homogenisierzeit verkürzt werden kann und die Verwendung weniger aktiver anionischer Emulgatoren, wie z.B. Fettsäuresalzen, möglich ist.

Die Lösung der Aufgabe erfolgt durch die im Anspruch 1 genannten Massnahmen.

Nachstehend werden das erfindungsgemässe Verfahren und die in den einzelnen Verfahrensstufen anzuwendenden Einsatzstoffe beschrieben.

Das gattungsgemässe Verfahren der Mikrosuspension ist in 1 bis 4 beschrieben. Als · Mikrosuspensionsverfahren im Sinne der vorliegenden Erfindung soll dabei ein Verfahren verstanden werden, wie es in 5, Spalte 1, Zeilen 31 ff., definiert ist. Das erfindungsgemässe Verfahren wird bevorzugt diskontinuierlich durchgeführt.

Als zu polymerisierendes Monomeres a kommt insbesondere Vinylchlorid in Frage. Die Polymerisation kann jedoch, dies ist jedoch nicht bevorzugt, mit bis zu 20% der üblichen, mit Vinylchlorid copolymerisierbaren Monomeren, wie Vinylidenchlorid, Vinylestern, Vinylethern, Acrylestern, Acrylnitril oder Olefinen erfolgen.

Als Emulgatoren b werden beim erfindungsgemässen Verfahren die üblichen, wasserlöslichen Tenside angewendet. Bevorzugt werden anionische Tenside, wie Alkylsulfate, Alkyl- und Arylsulfonate, sowie Fettsäuresalze. Diese Emulgatoren werden in Mengen von 0,1 bis 3 Gew.-%, bezogen auf Monomer(e), eingesetzt.

Als Komponente c werden langkettige aliphatische, bevorzugt nicht verzweigte Alkohole mit 12 bis 30 C-Atomen verwendet. Diese Alkohole werden in Mengen von 0,1 bis 3 Gew.-%, bezogen auf Monomeres, angewendet; bevorzugt werden 0,1 bis 1 Gew.-%. Geeignete Alkohole sind Behenylal-

kohol, Stearylalkohol, Cetylalkohol, Palmitylalkohol, Dodecylalkohol. Von den genannten Alkoholen wird Stearylalkohol bevorzugt.

Als Initiatoren d werden für das erfindungsgemässe Verfahren die üblichen monomerlöslichen Radikalbildner angewendet. Bevorzugt werden langkettige Perester wie t-Butylperneodecanoat, das in 4 beschrieben ist. Die Menge der anzuwendenden Initiatoren beträgt 0,005 bis 0,5 Gew.-%, bezogen auf Monomer(e).

Das erfindungsgemässe Verfahren wird unter üblichen Bedingungen des Druckes und der Temperatur durchgeführt. Die Polymerisationstemperatur richtet sich nach dem gewünschten Molekulargewicht des herzustellenden Polymerisates; bevorzugt werden Temperaturen von 30 bis 70°C.

Zusätzlich zu den genannten Bestandteilen des Polymerisationsansatzes (Wasser + a bis d) können die üblichen Puffersubstanzen und Molekulargewichtsregler in den dem Fachmann bekannten Mengen bei der Polymerisation verwendet werden.

Wesentlich für die Durchführung des erfindungsgemässen Verfahrens ist, dass zunächst aus einem Gemisch aus dem für die Polymerisation benötigten Wasser oder mindestens einem Teil von diesem, der Gesamtmenge des Emulgators und der Gesamtmenge des anzuwendenden aliphatischen Alkohols bei Temperaturen oberhalb des Schmelzpunktes des Alkohols durch Rühren eine Voremulsion hergestellt wird. Zur Erzeugung dieser Voremulsion kann gegebenenfalls der Initiator oder ein Teil desselben mitverwendet werden. Die Voremulsion kann ohne weiteres durch mässiges Rühren bei Temperaturen oberhalb des Schmelzpunktes des Alkohols erzeugt werden. Diese Voremulsion ist auch nach Abkühlen unterhalb des Schmelzpunktes des Alkohols noch relativ stabil.

In die so erzeugte Voremulsion des Alkohols werden die Monomeren d und der oder die Initiatoren zugegeben. Danach wird der erhaltene Polymerisationsansatz emulgiert, homogenisiert und, falls dies erforderlich ist, auf die gewünschte Polymerisationstemperatur eingestellt.

Das erfindungsgemässe Verfahren besteht aus mehreren aufeinanderfolgenden Verfahrensstufen, der Herstellung der Voremulsion, dem Emulgieren, dem Homogenisieren und der Polymerisation. Alle diese Verfahrensstufen können in einer Reaktionszone durchgeführt werden. Bevorzugt wird jedoch eine Anlage benutzt, die aus Ansatzkessel und Polymerisationskessel besteht und bei der das Reaktionsgemisch mit Hilfe der Homogenisiermaschine aus dem Ansatzkessel in den Polymerisationskessel gepumpt werden kann. Weiterhin ist es möglich, die Voremulgierung des Fettalkohols, die Emulgierung und die Homogenisierung beim Befüllen des Polymerisationskessels vorzunehmen, ohne dass ein Ansatzkessel erforderlich ist. Zur Voremulgierung des Fettalkohols reichen bei oder oberhalb seiner Schmelztemperatur geringe Scherkräfte aus, wie sie durch Rühren mit einem Rührer gegeben sind, der auch bei der Polymerisation Verwendung findet. Die Voremulgierung kann auch mit Hilfe eines statischen Mischers geschehen.

Der Stabilitätsgewinn für das Polymerisationssystem ist eine Funktion der Menge des vorbehandelten Fettalkohols. Um bei gegebener Menge des Fettalkohols den maximalen Stabilitätsgewinn des Polymerisationssystems zu erzielen, wird bevorzugt die gesamte Menge des zum Einsatz kommenden Fettalkohols voremulgiert. Die zur Voremulgierung des Fettalkohols angewendeten Mengen an Emulgator und Wasser können dagegen in weitem Bereich gewählt werden, ohne dass der Stabilitätsgewinn für das System wesentlich verringert wird. In einer bevorzugten Ausführungsform wird für die Voremulgierung des Fettalkohols die gesamte Menge des Emulgators angewendet. Die für die Voremulgierung des Fettalkohols anzuwendende Wassermenge richtet sich danach, ob die Temperatur der Voremulgierung oberhalb der Homogenisiertemperatur liegt. Sie sollte so gewählt werden, dass durch die Zugabe der restlichen Wassermenge und des Vinylchlorids die Homogenisiertemperatur ohne Kühlung eingestellt werden kann.

Nach der Voremulgierung des aliphatischen Fettalkohols werden beim erfindungsgemässen Verfahren gegebenenfalls das restliche Ansatzwasser sowie die gegebenenfalls angewendeten weiteren Hilfsstoffe, das Vinylchlorid und der Initiator zugegeben. Die Zugabe des Initiators erfolgt dabei, insbesondere wenn das Vinylchlorid zum Kühlen auf Homogenisiertemperatur ausgenutzt wird und besonders aktive Initiatoren eingesetzt werden, bevorzugt nach der Zugabe des Vinylchlorids, um eine vorzeitige Polymerisation zu vermeiden. Die Homogenisierung des Polymerisationsansatzes ist dem Fachmann geläufig, hervorzuheben ist, dass durch das erfindungsgemässe Verfahren erheblich kürzere Homogenisierzeiten oder geringere Scherkräfte bei der Homogenisierung angewendet werden können. Gleichzeitig kann der Koagulatanteil auch bei Reduzierung der Homogenisierzeit bzw. bei Reduzierung der Scherbedingungen während der Homogenisierungsstufe auf unter 1% beschränkt werden. Ferner erlaubt das erfindungsgemässe Verfahren die Anwendung von wasserlöslichen Tensiden, die keine ausreichende Stabilität des Polymerisationssystems bei gegebenen Homogenisierbedingungen gewährleisten. So kann auch bei Verwendung von Fettsäuresalzen eine Polymerdispersion mit weniger als 1% Koagulat nach dem erfindungsgemässen Verfahren erhalten werden.

Nach Beendigung der Polymerisation wird die Polymerdispersion nach üblichen Methoden, z.B. durch Sprühtrocknen, aufgearbeitet. Die nach dem erfindungsgemässen Verfahren hergestellten Polymerisate lassen sich mit den üblichen Weichmachern zu Plastisolen verarbeiten.

Die Erfindung wird nachstehend anhand von Vergleichsversuchen und Beispielen näher erläutert. Die in diesen Versuchen und Beispielen genannten Teile und Prozente beziehen sich, sofern nichts anderes vermerkt ist, auf das Gewicht, wobei alle Angaben auf das Monomer bezogen sind.

*Vergleichsversuch A*

In einen sauerstofffreien Druckbehälter (Ansatzkessel) wurden bei Raumtemperatur 50 kg Wasser, 0,5% Alkylsulfonat und 0,5% Alkylsulfat mit jeweils 12 bis 18 Kohlenstoffatomen im Alkylrest, 0,5% Stearylalkohol, 0,05% t-Butylperneodecanoat und 50 kg Vinylchlorid gegeben. Die Emulgierung erfolgte mit Hilfe des Impeller-Rührers bei 50 tr/min. Zur Homogenisierung wurde das Reaktionsgemisch bei 30°C im Kreis gepumpt. Die Druckdifferenz zwischen Saugseite und Druckseite der benutzten Pumpe betrug 5 bar. Dabei ergab sich eine Förderleistung von 100 l/min. Die Dauer der Homogenisierung durch Pumpen im Kreis war 30 min. Anschliessend wurde das Reaktionsgemisch mit Hilfe der gleichen als Homogenisiermaschine benutzten Pumpe in einen Polymerisationskessel gepumpt. Das Reaktionsgemisch wurde im Polymerisationskessel auf 55°C aufgeheizt und während der Polymerisation bei dieser Temperatur gehalten. Die Drehzahl des benutzten Impeller-Rührers betrug während der Polymerisation 20 tr/min. Nach 9 h wurde die Polymerisation durch Entspannen beendet. Der entstandene Polymerlatex hatte einen Feststoffgehalt von 43%. Die Koagulatmenge, die durch Filtrieren der Dispersion gefunden wurde, zusammen mit der Menge, die an den Kesselwänden haftete, betrug weniger als 1%, gemessen im feuchten Zustand.

*Vergleichsversuch B*

Das unter A beschriebene Verfahren wurde mit 15 min anstatt 30 min Homogenisierzeit durchgeführt. Das Reaktionsprodukt bestand praktisch ausschliesslich aus Koagulat.

*Vergleichsversuch C*

Das unter A beschriebene Verfahren wurde unter Verwendung von 0,1% NaOH, 0,085% NH$_3$ und 1% Laurinsäure anstelle von Alkylsulfonat und Alkylsulfat durchgeführt. Das Reaktionsprodukt fiel praktisch ausschliesslich als Koagulat an.

*Beispiel 1:*

In einem sauerstofffreien Druckbehälter (Ansatzkessel) wurden 50 kg Wasser, 0,5% Alkylsulfonat und 0,5% Alkylsulfat mit jeweils 12 bis 18 Kohlenstoffatomen im Alkylrest und 0,5% Stearylalkohol 30 min bei 70°C gehalten und dabei mit einem Impeller-Rührer bei 50 tr/min gerührt. Anschliessend wurden 50 kg VC zugegeben und es wurde auf 30°C gekühlt. Dann erfolgte die Zugabe von 0,05% t-Butylperneodecanoat. Homogenisierung und Polymerisation wurden wie im Vergleichsversuch B durchgeführt. Es wurde weniger als 1% Koagulat gefunden.

*Beispiel 2:*

Das in Beispiel 1 beschriebene Verfahren wurde ohne Pumpen im Kreis durchgeführt. Das Reaktionsgemisch wurde nur durch einmaliges Pumpen aus dem Ansatzkessel in den Polymerisationskessel homogenisiert. Die Koagulatmenge war kleiner als 1%.

*Beispiel 3:*

Das in Beispiel 2 beschriebene Verfahren wurde mit den Änderungen durchgeführt, dass die Vorbehandlung des Stearylalkohols in der halben Menge (25 kg) des Ansatzwassers erfolgte und anschliessend das restliche Ansatzwasser kalt zugegeben wurde. Die Koagulatmenge war kleiner als 1%.

*Beispiel 4:*

Das in Beispiel 2 beschriebene Verfahren wurde mit der Änderung durchgeführt, dass vor der VC-Zugabe auf 30°C gekühlt wurde. Die Koagulatmenge war kleiner als 1%.

*Beispiel 5:*

Das in Beispiel 1 beschriebene Verfahren wurde mit 0,1% NaOH, 0,085% NH$_3$ und 1% Laurinsäure anstelle von Alkylsulfonat und Alkylsulfat bei einer Umpumpzeit (Homogenisierzeit) wie im Vergleichsversuch C durchgeführt. Die Koagulatmenge war kleiner als 1%.

**Patentansprüche**

1. Verfahren zur diskontinuierlichen Polymerisation von

(a) Vinylchlorid, gegebenenfalls mit bis zu 20 Gew.-% damit copolymerisierbaren Monomeren, unter üblichen Bedingungen (Druck, Temperatur) in Gegenwart von Wasser,

(b) mindestens einem Emulgator,

(c) mindestens einem aliphatischen Alkohol mit 12 bis 30 C-Atomen, und

(d) mindestens einem monomerlöslichen Initiator,

nach vorheriger Homogenisierung des Polymerisationsansatzes, dadurch gekennzeichnet, dass man zunächst das Gemisch aus mindestens einem Teil des Wassers, dem Emulgator (b) und dem Alkohol (c) unter Rühren auf Temperaturen oberhalb des Schmelzpunktes des Alkohols (c) erhitzt (Voremulgierung des Alkohols) und in diese Voremulsion das (die) Monomere(n) (a) und den (die) Initiator(en) (d) zugibt, den erhaltenen Polymerisationsansatz emulgiert und homogenisiert und diesen, falls erforderlich, auf die Polymerisationstemperatur einstellt.

2. Verwendung der nach Anspruch 1 hergestellten Polymerisate zur Herstellung von Plastisolen.

**Claims**

1. A process for the batch polymerization of

(*a*) vinyl chloride, where appropriate with not more than 20% by weight of monomers copolymerizable with it, under conventional conditions (pressure and temperature) in the presence of water,

(*b*) at least one emulsifier,

(*c*) at least one aliphatic alcohol of 12 to 30 carbon atoms, and

(*d*) one or more monomer-soluble initiators, after prior homogenization of the polymerization batch, wherein the mixture of some or all of the water with the emulsifier (*b*) and the alcohol (*c*) is heated to above the melting-point of the alcohol (*c*), with stirring, to pre-emulsify the alcohol, the monomer(s) (*a*) and the initiator(s) (*d*) are added to this pre-emulsion and the resulting polymerization batch is emulsified and then homogenized and brought to the polymerization temperature if necessary.

2. The use of the polymers prepared in accordance with claim 1 for the production of plastisols.

## Revendications

1. Procédé pour la polymérisation en discontinu du

(a) chlorure de vinyle et éventuellement jusqu'à 20% en poids de monomères copolymérisables avec celui-ci, dans des conditions opératoires (pression, température) usuelles et en présence d'eau,

(b) d'au moins un émulsionnant,

(c) d'au moins un alcool aliphatique en $C_{12}$ à $C_{30}$, et

(d) d'au moins un initiateur soluble dans le(s) monomère(s),

le mélange à polymériser étant homogénéisé au préalable, caractérisé en ce que l'on porte d'abord un mélange d'au moins une partie de l'eau, de l'émulsionnant (b) et de l'alcool (c), sous agitation, à une température supérieure au point de fusion de l'alcool (c) (préémulsionnement de l'alcool), puis en ce qu'on ajoute à cette préémulsion le(s) monomère(s) (a) et le(s) initiateur(s) (d), en ce qu'on émulsionne et homogénéise le mélange à polymériser et en ce qu'on le porte, si nécessaire, à la température de polymérisation.

2. Utilisation des polymères préparés par le procédé selon la revendication 1 pour la production de plastisols.